# FASCICULE DE BREVET EUROPEEN

(11) **EP 2 276 651 B1**
(45) Date de publication et mention de la délivrance du brevet: **14.03.2012**
(21) Numéro de dépôt: 09742239.8
(22) Date de dépôt: 03.04.2009
(51) Int. Cl.: B60R 21/215

(54) **DISPOSITIF DE FIXATION D'UN VOLET DE COUSSIN GONFLABLE**
VORRICHTUNG ZUR SICHERUNG EINER AIRBAG-EINSATZARMATUR
DEVICE FOR SECURING AN AIRBAG DEPLOYMENT PANEL

(30) Priorité: 03.04.2008 FR 0852210
(43) Date de publication de la demande: 26.01.2011
(73) Titulaire: Faurecia Interieur Industrie, 92000 Nanterre (FR)
(72) Inventeur: LE HOANG, Daniel, F-95260 Beaumont sur Oise (FR); MEZIERE, Jérôme, F-92270 Bois Colombes (FR); BRUNET, Michael, F-60510 Therdonne (FR)
(74) Mandataire: Domenego, Bertrand
(86) Numéro de dépôt international: PCT/FR2009/050571
(87) Numéro de publication internationale: WO 2009/136041

(56) Documents cités:
- EP-A- 1 033 293
- WO-A-02/28691
- DE-A1- 19 645 866
- JP-A- 7 285 406

## Description

La présente invention concerne un dispositif de fixation d'un volet de fermeture d'un boîtier de coussin gonflable, du type comprenant un filet souple dont une première partie extrême est surmoulée par ledit volet et une deuxième partie est surmoulée par un élément de support, la partie centrale s'étendant entre lesdites première et deuxième parties formant une charnière souple d'articulation du volet par rapport à l'élément de support. JP07 285406 décrit un dispositif de fixation selon le préambule de la revendication 1.

La planche de bord d'un véhicule automobile est généralement équipée d'un boîtier de coussin gonflable destiné à protéger le passager du véhicule en cas de choc contre ce véhicule. Le boîtier de coussin gonflable est disposé sous une peau continue formant la partie visible de la planche de bord de sorte que le boîtier est masqué par la peau et est sensiblement invisible depuis l'habitacle du véhicule. La peau comprend alors une zone sécable se déchirant lors du déploiement du coussin gonflable afin de libérer un passage pour le coussin vers l'habitacle.

Afin d'entraîner le déchirement et le déplacement de la peau lors du déploiement du coussin gonflable, on prévoit un volet rigide solidaire de la partie de la peau qui doit se déplacer et disposé au voisinage de la partie sécable sous la peau. Le déploiement du coussin gonflable entraîne le déplacement du volet qui transmet l'énergie de ce déplacement à la peau du fait de sa rigidité.

Le volet est articulé par rapport au boîtier du coussin gonflable au moyen d'une charnière. On connaît des charnières souples formées par un filet surmoulé d'une part par le volet et d'autre part par un élément de support du boîtier de coussin gonflable. La partie du filet s'étendant entre la partie surmoulée par le volet et celle surmoulée par l'élément de support forme la charnière souple. Ce filet sert à la fois à la rotation du volet lors du déploiement du coussin gonflable et à retenir le volet afin que celui-ci reste solidaire de la planche de bord et ne s'échappe pas dans l'habitacle du véhicule, ce qui pourrait être dangereux.

Cependant, l'énergie du déploiement du coussin gonflable entraîne des contraintes sur le filet qui a tendance à se délaminer dans sa partie surmoulée par l'élément de support. Un tel délaminage peut entraîner la sortie du filet de l'élément de support ou son déchirement. Le filet ne remplit alors plus sa fonction de maintien du volet par rapport à la planche de bord, ce qui constitue un danger pour les occupants du véhicule automobile.

Afin de pallier cet inconvénient, on agrandit la longueur de filet surmoulée par l'élément de support afin d'éviter la sortie du filet de cet élément ou on prévoit des pions de centrage dans le moule de surmoulage afin de garantir le placement correct et le maintien du filet dans l'épaisseur de matériau plastique surmoulé.

De telles solutions ne sont cependant pas satisfaisantes. En effet, la longueur disponible pour le surmoulage du filet est limitée par des composants environnant le boîtier de coussin gonflable. De plus, pour augmenter la longueur de filet surmoulée, il faut ajouter du matériau plastique ce qui augmente la masse de la planche de bord. Les pions de centrage ne permettent pas, quant à eux, de garantir le positionnement correct du filet par rapport à l'élément surmoulé. En effet, la position du filet peut varier selon le procédé d'injection du matériau plastique. Cette position est notamment sensible à la pression et à la température d'injection du matériau plastique. En outre, plus le nombre de pions de centrage est important et plus le surmoulage du filet est fragilisé du fait de la réduction de la quantité de matériau plastique injectée. L'élément de support risque alors de casser lors du déploiement du coussin gonflable.

L'un des objectifs de l'invention est de pallier ces inconvénients en proposant un dispositif de fixation du type précité dans lequel le filet ne risque pas de s'échapper de l'élément de support sans ajout de masse sur l'élément de support et sans nécessiter d'adaptation particulière du moule de surmoulage.

A cet effet, l'invention concerne un dispositif de fixation du type précité, dans lequel la deuxième partie comprend une partie extrême saillant de l'élément de support à l'opposé de la partie formant charnière, ladite partie extrême comprenant un élément de butée, de sorte que, lors du déploiement du coussin, l'élément de butée empêche la seconde partie de sortir de l'élément de support.

Selon d'autres caractéristiques du dispositif de fixation :
- l'élément de butée comprend une couture réalisée sur le filet dans la partie extrême de la deuxième partie dudit filet ;
- le filet est replié sur lui-même à la partie extrême de la deuxième partie dudit filet, la couture fixant les parties repliées du filet entre elles ; et
- l'élément de butée comprend un élément de surmoulage, ledit élément surmoulant au moins partiellement la partie extrême.

L'invention concerne également un élément de support d'un boîtier de coussin gonflable du type comprenant une peau destinée à recouvrir ledit boîtier et un volet de fermeture dudit boîtier, ledit volet étant fixé à l'élément de support par un dispositif de fixation, dans lequel le dispositif de fixation est tel que décrit ci-dessus.

Selon d'autres caractéristiques de l'élément de support :
- le volet est en outre fixé à ladite peau, de sorte que le volet entraîne le déplacement d'une partie déplaçable de ladite peau lors du déploiement du coussin gonflable afin de libérer un passage pour ledit coussin gonflable. ;
- la deuxième partie du filet est surmoulée dans une pièce en matériau plastique fixée à la peau par des moyens de fixation du boîtier de coussin gonflable à l'élément de support ;
- la pièce et les moyens de fixation sont formés d'une seule pièce ;
- la peau comprend une zone sécable disposée au voisinage d'une partie extrême libre du volet, ladite zone se déchirant lors du déploiement du coussin gonflable sous l'effet du déplacement du volet, de sorte à libérer un passage pour ledit coussin gonflable ; et
- la peau comprend une zone de charnière disposée au voisinage de la charnière souple du volet de sorte à permettre le déplacement de ladite peau lors du déploiement du coussin gonflable.

L'invention concerne également une planche de bord comprenant un élément de support tel que décrit ci-dessus et un véhicule automobile comprenant une telle planche de bord.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe d'une planche de bord selon un premier mode de réalisation de l'invention,
- la Fig. 2 est une représentation schématique en coupe d'une planche de bord selon un deuxième mode de réalisation de l'invention.

L'invention est décrite pour une planche de tableau de bord 1. Cependant, on comprendra que le dispositif de fixation de l'invention peut être utilisé pour d'autres éléments d'un véhicule automobile, tels que des panneaux de garnissages de l'habitable du véhicule ou le volant du véhicule, etc.

La planche de bord 1 comprend une peau 2 réalisée en un matériau plastique injecté. La peau 2 présente une certaine souplesse conférant à la planche de tableau de bord 1 un toucher agréable et une rigidité suffisante pour remplir sa fonction.

La peau 2 recouvre un boîtier de coussin gonflable 4 qui est fixé à la peau 2 par des moyens de fixation 6. Ces moyens de fixation 6 comprennent par exemple au moins une pièce 8 en matériau plastique fixée sous la peau 2 et à laquelle est vissée le boîtier 4 par des vis 10.

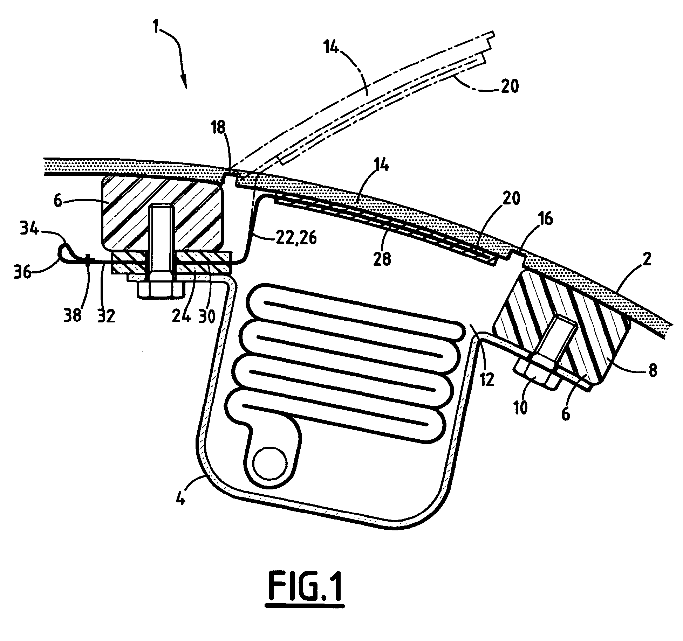

Le boîtier 4 comprend une ouverture 12 disposée en regard d'une zone déplaçable 14 de la peau 2. Ainsi, lors du déploiement du coussin gonflable, celui-ci passe par l'ouverture 12 et appuie contre la zone déplaçable 14 de sorte à la faire passer dans la position représentée en traits pointillés sur la Fig. 1 et à libérer un passage pour le coussin gonflable vers l'habitacle.

Afin de permettre le déplacement de la zone 14, une partie extrême de ladite zone 14 comprend une zone sécable 16 qui se déchire lors du déploiement du coussin gonflable. Cette zone sécable 16 est par exemple formée par un amincissement de la peau 2 et par la réalisation d'une couture fusible entre la zone déplaçable 14 et le reste de la peau 2.

L'autre partie extrême de la zone 14 comprend une zone de charnière 18 permettant la rotation de la zone déplaçable 14 par rapport au reste de la peau 2 après que la zone sécable 16 a été déchirée. Cette zone de charnière 18 est par exemple formée par un amincissement de matière de la peau 2.

La peau 2 n'est pas suffisamment rigide pour garantir un déplacement convenable de la zone 14 lors du déploiement du coussin gonflable. En effet, cette zone pourrait juste se déformer sans entraîner le déchirement de la zone sécable 16. Afin de garantir le déchirement de la zone sécable 16 et donc le déplacement de la zone 14, on prévoit un volet 20 rigide fixé sous la zone déplaçable 14 et contre lequel le coussin appuie lors de son déploiement. La rigidité du volet 20 permet de transmettre de façon optimale l'énergie du déploiement du coussin gonflable à la zone sécable 16 afin que celle-ci se déchire convenablement et que la zone 14 se déplace comme souhaité. Le volet 20 est réalisé en un matériau plastique injecté. Le volet 20 est par exemple collé ou soudé à la peau 2.

Le volet 20 est articulé par rapport à la partie fixe de la peau 2, afin de permettre le déplacement du volet 20 qui entraîne le déplacement de la zone 14 comme représenté par les traits pointillés de la Fig. 1. A cet effet, le volet 20 est relié par une charnière souple 22 à une pièce 24 en matériau plastique formant élément de support et fixée à la peau 2 par les moyens de fixation 6 du boîtier de coussin gonflable 4. La charnière souple 22 sert également de charnière de secours, en cas de rupture de la zone de charnière 18 de la peau 2 et permet d'éviter que le volet et la zone déplaçable 14 ne soient éjectés dans l'habitacle lors du déploiement du coussin gonflable. Selon un mode de réalisation non représenté, la pièce 24 est formée d'une seule pièce avec les moyens de fixation 6, c'est-à-dire que la pièce 24 est formée d'une seule pièce avec la pièce 8 fixée sous la peau.

La charnière souple 22 est formée par un filet 26 dont une première partie extrême 28 est surmoulée par le volet 20 et dont une deuxième partie 30 est surmoulée par la pièce 24. La partie s'étendant entre la première et la deuxième parties 28 et 30 forme la charnière souple 22 permettant au volet 20 d'être articulé par rapport à la partie fixe de la peau souple 2. La zone sécable 16 de la peau 2 est disposée au voisinage de la partie extrême libre du volet 20, c'est-à-dire de la partie par laquelle n'entre pas le filet dans le volet. La zone de charnière 18 de la peau 2 est disposée au voisinage de la charnière souple 22 du volet 20.

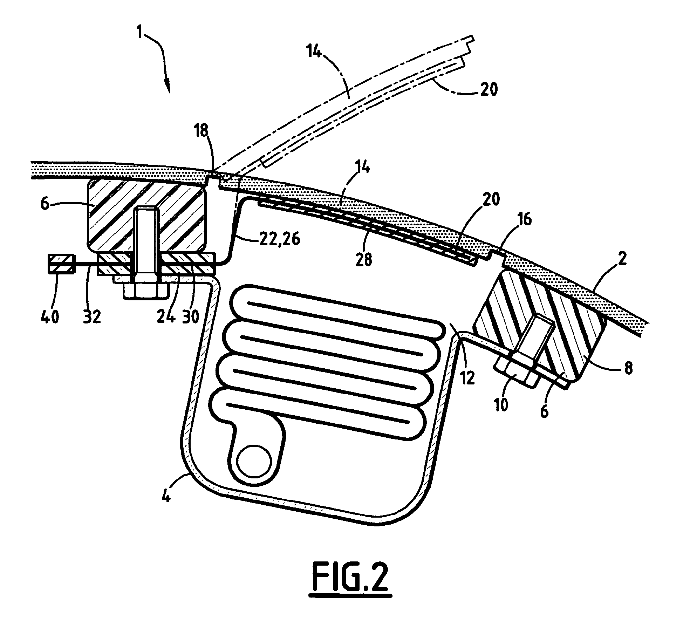

La deuxième partie 30 du filet 26 comprend une partie extrême 32 saillant de la pièce 24 dans laquelle la deuxième partie 30 est surmoulée. La partie extrême 32 sort de la pièce 24 du côté opposé de la charnière souple 22, comme représenté sur les Fig. 1 et 2.

Selon un premier mode de réalisation représenté sur la Fig. 1, la partie extrême 32 est repliée sur elle-même de sorte à présenter deux parties 34 et 36 disposées l'une sur l'autre. Ces deux parties 34 et 36 sont fixées l'une à l'autre par une couture 38. Les parties repliées 34 et 36, ainsi que la couture 38 forme ainsi un élément de butée contre la pièce en matériau plastique 24 en cas de déplacement, entraîné par le déplacement de la charnière souple 22, de la deuxième partie 30 du filet à l'intérieur de la pièce 24. En effet, l'épaisseur de la partie extrême 32 est augmentée par rapport à l'épaisseur de la deuxième partie 30 à l'intérieur de la pièce 24. Ainsi si la charnière souple 22 se déplace du fait de l'énergie déployée par le coussin gonflable et de la violence du déplacement du volet 20, les parties repliées 34 et 36 ainsi que la couture 38 viennent en appui contre la pièce 24 et empêchent la deuxième partie 30 de sortir de la pièce 24.

Selon un deuxième mode de réalisation représenté sur la Fig. 2, l'élément de butée est formé par un élément de surmoulage 40 surmoulant au moins partiellement la partie extrême 32. Si la charnière souple 22 se déplace du fait de l'énergie déployée par le coussin gonflable et de la violence du déplacement du volet 20, l'élément de surmoulage 40 vient en appui contre la pièce 24 et empêche la deuxième partie 30 de sortir de la pièce 24.

Ainsi, malgré la violence du déplacement du volet 20 qui peut entraîner un délaminage du filet 26, on garantit que sa deuxième partie 30 reste à l'intérieur de la pièce 24 et qu'il n'y a pas de risque que le volet 20 et la zone déplaçable 14 se désolidarisent de la peau 2. La charnière souple 22 remplit ainsi son rôle de charnière de secours.

Le maintien de la deuxième partie 30 dans la pièce 24 est réalisé de façon particulièrement simple qui ne nécessite pas d'ajout de matière et donc de masse à la planche de tableau de bord. En outre, aucune adaptation du moule de surmoulage n'est nécessaire pour surmouler le filet. Il suffit de prévoir une partie de filet en dehors du moule pour réaliser la partie extrême saillante 32.

## Revendications

1. Dispositif de fixation d'un volet (20) de fermeture d'un boîtier (4) de coussin gonflable comprenant un filet (26) souple dont une première partie extrême (28) est surmoulée par ledit volet (20) et une deuxième partie (30) est surmoulée par un élément de support (24), la partie centrale s'étendant entre lesdites première et deuxième parties (28, 30) formant une charnière souple (22) d'articulation du volet (20) par rapport à l'élément de support (24), la deuxième partie (30) comprenant une partie extrême (32) saillant de l'élément de support (24) à l'opposé de la partie formant charnière (22), **caractérisé en ce que** ladite partie extrême (32) comprend un élément de butée, de sorte que, lors du déploiement du coussin, l'élément de butée empêche la seconde partie (32) de sortir de l'élément de support (24).

2. Dispositif de fixation selon la revendication 1, **caractérisé en ce que** l'élément de butée comprend une couture (38) réalisée sur le filet (26) dans la partie extrême (32) de la deuxième partie (30) dudit filet.

3. Dispositif de fixation selon la revendication 2, **caractérisé en ce que** le filet (26) est replié sur lui-même à la partie extrême (32) de la deuxième partie (30) dudit filet, la couture (38) fixant les parties repliées (34, 36) du filet (26) entre elles.

4. Dispositif de fixation selon la revendication 1, **caractérisé en ce que** l'élément de butée comprend un élément de surmoulage (40), ledit élément surmoulant au moins partiellement la partie extrême (32).

5. Planche de bord de véhicule automobile comprenant un élément de support d'un boîtier (4) de coussin gonflable comprenant une peau (2) destinée à recouvrir ledit boîtier (4) et un volet (20) de fermeture dudit boîtier (4), ledit volet (20) étant fixé à l'élément de support par un dispositif de fixation, **caractérisée en ce que** ledit dispositif de fixation est selon l'une quelconque des revendications 1 à 4.

6. Planche de bord selon la revendication 5, **caractérisée en ce que** le volet (20) est en outre fixé à ladite peau (2), de sorte que le volet (20) entraîne le déplacement d'une partie déplaçable (14) de ladite peau (2) lors du déploiement du coussin gonflable afin de libérer un passage pour ledit coussin gonflable.

7. Planche de bord selon la revendication 5 ou 6, **caractérisée en ce que** la deuxième partie (30) du filet (26) est surmoulée dans une pièce (24) en matériau plastique fixée à la peau (2) par des moyens de fixation (6) du boîtier (4) de coussin gonflable à l'élément de support.

8. Planche de bord selon la revendication 7, **caractérisée en ce que** la pièce (24) et les moyens de fixation (6) sont formés d'une seule pièce.

9. Planche de bord selon l'une quelconque des revendication 5 à 8, **caractérisée en ce que** la peau (2) comprend une zone sécable (16) disposée au voisinage d'une partie extrême libre du volet (20), ladite zone (16) se déchirant lors du déploiement du coussin gonflable sous l'effet du déplacement du volet (20), de sorte à libérer un passage pour ledit coussin gonflable.

10. Planche de bord selon l'une quelconque des revendications 5 à 9, **caractérisée en ce que** la peau (2) comprend une zone de charnière (18) disposée au voisinage de la charnière souple (22) du volet (20) de sorte à permettre le déplacement de ladite peau (2) lors du déploiement du coussin gonflable.

11. Véhicule automobile, **caractérisé en ce qu'**il comprend une planche de bord (1) selon l'une quelconque des revendications 5 à 10.

## Claims

1. A device for securing a closing flap (20) of an airbag housing (4) comprising a flexible net (26), a first end portion (28) of which is overmolded by said flap (20) and a second portion (30) is overmolded by a support element (24), the central portion extending between said first and second portions (28, 30) forming a flexible hinge (22) for articulating the flap (20) relative to the support element (24), the second portion (30) comprising an end part (32) protruding from the support element (24) on the opposite side to the hinge-forming part (22), **characterized in that** said end part (32) comprises a stop element, such that, when the airbag is deployed, the stop element prevents the second part (32) from being pulled out of the support element (24).

2. The securing device according to claim 1, **characterized in that** the stop element comprises a seam (38) made in the net (26) in the end part (32) of the second portion (30) of said net.

3. The securing device according to claim 2, **characterized in that** the net (26) is folded on itself at the end part (32) of the second portion (30) of said net, the seam (38) fastening the folded parts (34, 36) of the net (26) to each other.

4. The securing device according to claim 1, **characterized in that** the stop element comprises an overmold element (40), said element at least partially overmolding the end part (32).

5. A motor vehicle dashboard comprising a support element of an airbag housing (4) of the type comprising a skin (2) intended to cover said housing (4) and a closing flap (20) of said housing (4), said flap (20) being secured to the support element by a securing device, **characterized in that** the securing device is according to any one of claims 1 to 4.

6. The dashboard according to claim 5, **characterized in that** the flap (20) is also secured to said skin (2), such that the flap (20) drives the displacement of a displaceable part (14) of said skin (2) when the airbag is deployed in order to free a passage for said airbag.

7. The dashboard according to claim 5 or 6, **characterized in that** the second portion (30) of the net (26) is overmolded by a piece (24) made of a plastic material secured to the skin (2) using means (6) for securing the airbag housing (4) to the support element.

8. The dashboard according to claim 7, **characterized in that** the piece (24) and the securing means (6) are made in a single piece

9. The dashboard according to any one of claims 5 to 8, **characterized in that** the skin (2) comprises a breakable area (16) arranged in the vicinity of a free end part of the flap (20), said area (16) tearing when the airbag is deployed under the effect of the displacement of the flap (20), so as to free a passage for said airbag.

10. The dashboard according to any one of claims 5 to 9, **characterized in that** the skin (2) comprises a hinge area (18) arranged in the vicinity of the flexible hinge (22) of the flap (20) so as to allow the displacement of said skin (2) when the airbag is deployed.

11. A motor vehicle, **characterized in that** it comprises a dashboard (1) according to any one of claims 5 to 10.

## Patentansprüche

1. Vorrichtung zur Sicherung bzw. Befestigung einer Verschlussklappe (20) eines Airbag-Gehäuses (4), ein flexibles Netz (26) umfassend, von dem ein erster Endabschnitt (28) in die genannte Klappe (20) eingegossen ist, und ein zweiter Abschnitt (30) in ein Trägerelement (24) eingegossen ist, wobei der sich zwischen dem ersten und dem zweiten Abschnitt (28, 30) erstreckende Mittelteil dabei ein flexibles Scharnier (22) als Gelenk der Klappe (20) in Bezug auf das Trägerelement (24) bildet, wobei der zweite Abschnitt (30) einen Endteil (32) umfasst, der aus dem Trägerelement (24) heraussteht, entgegengesetzt zu dem das Scharnier bildenden Abschnitt (22),
**dadurch gekennzeichnet, dass** der genannte Endteil (32) ein Anschlagselement umfasst, das verhindert, dass bei der Entfaltung des Kissens der zweite Abschnitt (32) aus dem Anschlagselement (24) herausgezogen wird.

2. Vorrichtung nach Anspruch 1, **dadurch gekennzeichnet, dass** das Anschlagselement eine Naht (38) umfasst, realisiert am Netz (26) in dem Endteil (32) des zweiten Abschnitts (30) des genannten Netzes.

3. Vorrichtung nach Anspruch 2, **dadurch gekennzeichnet, dass** das Netz (26) im Endteil (32) des zweiten Abschnitts (30) des genannten Netzes auf sich selbst zurückgefaltet ist, wobei die Naht (38) die Rückfaltungsteile (34, 36) des Netzes (26) aneinander befestigt.

4. Vorrichtung nach Anspruch 1, **dadurch gekennzeichnet, dass** das Anschlagselement ein aufgegossenes Element (40) umfasst, wobei der Endteil (32) dabei wenigstens teilweise in das genannte Element eingegossen ist.

5. KFZ-Armaturenbrett, mit einem Trägerelement eines Airbag-Gehäuses (4), eine Schale (2) umfassend, die dazu bestimmt ist, das genannte Gehäuse (4) und eine Verschlussklappe (20) des genannten Gehäuses (4) zu überdecken, wobei die genannte Klappe (20) durch eine Befestigungseinrichtung an dem Trägerelement befestigt ist,
**dadurch gekennzeichnet, dass** die genannte Befestigungseinrichtung gemäß einem der Ansprüche 1 bis 4 ist.

6. Armaturenbrett nach Anspruch 5, **dadurch gekennzeichnet, dass** die Klappe (20) außerdem an der genannten Schale (2) befestigt ist, so dass bei der Entfaltung des Airbags die Klappe (20) die Verschiebung eines beweglichen Teils (14) der genannten Schale (2) bewirkt, um einen Durchgang für den genannten Airbag freizumachen.

7. Armaturenbrett nach Anspruch 5 oder 6, **dadurch gekennzeichnet, dass** der zweite Abschnitt (30) des Netzes (26) eingegossen ist in ein Teil (24) aus Kunststoff, das an der Schale (2) durch Befestigungseinrichtungen (6) des Airbag-Gehäuses (4) am Trägerelement befestigt ist.

8. Armaturenbrett nach Anspruch 7, **dadurch gekennzeichnet, dass** das Teil (24) und die Befestigungseinrichtungen (6) aus einem Stück sind.

9. Armaturenbrett nach einem der Ansprüche 5 bis 8, **dadurch gekennzeichnet, dass** die Schale (2) eine Spaltungs- bzw. Sollbruchzone (16) umfasst, angeordnet in der Nähe eines freien Endteils der Klappe (20), wobei die genannte Zone (16) bei der Entfaltung des Airbags unter der Verschiebungswirkung der Klappe (20) zerbricht, um einen Durchgang für den genannten Airbag frei zu machen.

10. Armaturenbrett nach einem der Ansprüche 5 bis 9, **dadurch gekennzeichnet, dass** die Schale (2) eine Scharnierzone (18) umfasst, angeordnet in der Nähe des flexiblen Scharniers (22) der Klappe (20), um bei der Entfaltung des Airbags das Verschieben der genannten Schale (2) zu ermöglichen.

11. Kraftfahrzeug, **dadurch gekennzeichnet, dass** es ein Armaturenbrett (1) nach einem der Ansprüche 5 bis 10 umfasst.
